**Europäisches Patentamt**

**European Patent Office**

**Office européen des brevets**

(11) Veröffentlichungsnummer: **0 116 145**
**A1**

(12) # EUROPÄISCHE PATENTANMELDUNG

(21) Anmeldenummer: **83112380.7**

(22) Anmeldetag: **09.12.83**

(51) Int. Cl.³: **D 21 C 5/02**

(30) Priorität: **15.02.83 DE 3305131**

(43) Veröffentlichungstag der Anmeldung:
**22.08.84 Patentblatt 84/34**

(84) Benannte Vertragsstaaten:
**AT BE CH DE FR GB IT LI NL SE**

(71) Anmelder: **Degussa Aktiengesellschaft**
**Weissfrauenstrasse 9**
**D-6000 Frankfurt am Main 1(DE)**

(72) Erfinder: **Krüger, Horst, Dr.**
**Kiesstrasse 43**
**D-6100 Darmstadt(DE)**

(72) Erfinder: **Traser, Werner**
**Bornstrasse 22**
**D-6100 Darmstadt-Arheiligen(DE)**

(72) Erfinder: **Berndt, Wilhelm, Dr.**
**Bertha-von-Suttner-Ring 11**
**D-6000 Frankfurt am Main(DE)**

(54) **Verfahren zum Entfärben von Altpapier.**

(57) Die Erfindung betrifft ein Verfahren zum Entfärben von Altpapier, bei dem das Altpapier unter Zugabe einer Teilmenge der Deinkingchemikalien aufgelöst wird, nach der Flotation dann in einem Reaktionsturm mit dem Rest der Deinkingchemikalien versetzt und anschließend erneut flotiert wird.

Die geklärten Abwässer aus den beiden Flotationsprozessen können jeweils in einem geschlossenen Kreislauf in das Verfahren einbezogen werden.

EP 0 116 145 A1

Degussa Aktiengesellschaft
6000 Frankfurt am Main 1

Verfahren zum Entfärben von Altpapier

Die Erfindung betrifft ein Verfahren zum Entfärben von Altpapier. Das Recycling von Altpapier ist ein Prozeß von erheblicher wirtschaftlicher Bedeutung. Mit einer Recyclingquote von 30-40 % zählt Altpapier zu den wichtigsten Rohstoffen der Papierproduktion. Der größere Teil dieses Materials dient für die Herstellung von Kartonagen und Verpackungspapier. Für den Einsatz im graphischen Bereich bilden Farbe und Helligkeit wesentliche Kriterien. Dieser Produktionsbereich wird für Altpapier durch Reinigungsverfahren zugänglich, die eine Abscheidung des Druckfarbenanteils einschließen. Man bezeichnet diesen Verfahrensschritt allgemein als Deinking.

Die Deinkingkapazität wird weltweit mit 4,5 Mill t Altpapier pro Jahr angegeben. Von den beiden infrage kommenden Trennverfahren hat sich in Europa die Flotation durchgesetzt. Eine ausführliche Beschreibung des Standes der Technik ist in den Schriften "Recycling of Papermaking Fibres - Flotation Deinking" by E. Ortner, Tappi 1981 iSB Nr. 0-89852-393-1 und "PTS-Deinking-Symposium 1981" Günther Staib Verlag, D 7950 Biberach 1, zu entnehmen.

...

Deinkte Altpapierstoffe sind wesentliche Bestandteile von Zeitungs- und anderen holzhaltigen Druckpapieren, Toilettkrepp und mehrlagigem Karton.

Die wesentlichen Verfahrensschritte des Flotationsdeinkens sind Dispergierung und Flotation. In der Dispergierstufe werden die Druckfarben mit Hilfe netzender Chemikalien gelockert und in der wässrigen Flotte dispergiert. Bei der Flotation werden die dispergierten Farbteilchen nach einer Sammlung in Mikroflocken an Luftblasen angelagert und als Schaum abgeschieden.

Die ursprüngliche technische Konzeption verband Aufschlagen des Altpapiers mit dem Einmischen der Prozeßchemikalien. Dazu verwendete man den in der Papierindustrie üblichen Pulper, der bei 3 - 6 % Stoffdichte arbeitet. Der so vorbereitete Stoff wurde in einer Bütte 1 - 2 Stunden gelagert, vorsortiert, entstippt, auf ca. 1 % Stoffdichte verdünnt und dann der Flotation zugeführt. Nach der Flotation und einer Eindickung auf 5 - 20 % war der Regeneratstoff zur Weiterverarbeitung in der Papierfabrik fertig. Das bei der Eindickung anfallende Abwasser wurde in den Prozeß (Pulper, Verdünnung vor der Flotation) zurückgeführt. Das Wassersystem wurde mit Frischwasser ergänzt; es war meist nur bedingt geschlossen.

Die Chemikalieneinwirkung sollte aber vorteilhafterweise bei hoher Stoffdichte (10 - 30 %) erfolgen. Dazu wird auf die DE-PS 23 11 674 und die Veröffentlichungen von Ortner und Schweiss (WfP 110 (1982) Nr. 10 S.343 - 347) verwiesen. Diese Verfahren zerlegen den Prozeß in die 2 Hauptstufen, Aufbereitung und Deinking.

...

Die Aufbereitung beschränkt sich auf das Auflösen des Altpapiers, bei der ein pumpfähiger Faserbrei erzeugt und anschließend eingedickt wird. In dieser Stufe finden keine oder nur beschränkte Anteile der Deinkingchemikalien Anwendung.

Der am Ende dieser Stufe mit 10 - 30 % Stoffdichte vorliegende Stoff wird mit der Hauptmenge der Chemikalien vermischt. Man läßt ihn anschließend unter optimalen Bedingungen in einem Bleichturm reagieren. Danach wird er verdünnt, sortiert, entstippt und durch Flotation von den Druckfarben befreit. Nach einer weiteren Eindickung ist der Regeneratstoff für die Weiterverarbeitung fertig. Das Prozeßwasser der beiden Stufen durchläuft getrennte Kreisläufe. Dabei wird das Wasser der Aufbereitung aus der Flotation ergänzt. Die Ergänzung des Flotationswassers erfolgt mit Frischwasser.
Das Verfahrensschema I zeigt das Prinzip dieses "Dickstoff-Systems".

Mit dem Dickstoff-System wurde eine deutliche Verbesserung erzielt. Man erreicht bessere Reinigungs- und Bleichergebnisse bei gleichzeitiger Einsparung von Chemikalien. Das Verfahren weist jedoch noch folgende Schwachstellen auf:

1. Das in der Aufbereitungsstufe notwendige Aufschlagen des Altpapiers führt in Abwesenheit der Deinkingchemikalien zu einem Weißgehaltsverlust. Der Verzicht auf netzende und quellende Chemikalien (Seife, Fettalkoholäthoxylate, Natronlauge) erschwert das homogene Auflösen. - Gibt man jedoch die Deinkingchemikalien, ganz oder teilweise, bereits hier in das System, so reichert sich das

. . .

Kreislaufwasser sehr rasch mit dispergierter Druckfarbe in einer den Gesamtprozeß störenden Konzentration an.

2. Auch ohne Chemikalienzusatz verschmutzt das Wasser des ersten Kreislaufes sehr rasch. Eine konsequente Kreislaufschließung, wie sie aus betriebstechnischen und abwasserwirtschaftlichen Gründen anzustreben ist, führt sofort zu Wirkungseinbußen. Aus diesem Grunde wurde bereits vorgeschlagen, das Prozeßwasser der Aufbereitungsstufe einer Reinigungsbehandlung zu unterwerfen. Entsprechend der DE-AS 28 13 448 kann diese aus einer Flotation bestehen. Es hat sich jedoch gezeigt, daß auch sie die Störung nicht vollständig beseitigt. Da sich die Reinigung auf das Prozeßwasser beschränkt, bleiben die mit dem Altpapierstoff laufend eingebrachten Verunreinigungen im Stoff und werden im Dickstoffmischer und in der anschließenden Reaktionsstufe im nachgeschalteten Reaktionsturm für das Verfahren störwirksam.

Aufgabe der Erfindung ist ein Verfahren, bei dem das Wasser in der Aufbereitungs- und in der Endstufe jeweils in einem geschlossenen Kreislauf geführt werden kann, und gleichzeitig ausreichend hohe Weißgehalte erzielbar sind.

Gegenstand der Erfindung ist ein Verfahren zum Entfärben von Altpapier unter in der folgenden Reihenfolge durchzuführenden Maßnahmen:

a) Auflösung des Altpapiers in einem geeigneten Gefäß z.B. einem Dickstoffpulper unter ggf. gleichzeitigem Zusatz eines Teils der Deinkingchemikalien,

...

0116145

b) Vorsortierung und Dickstoffreinigung,

c) Eindickung auf Stoffdichten von über 10 %,

d) Behandlung in einem Reaktionsturm unter Zusatz
   des anderen Teil der Deinkingchemikalien,

e) Verdünnung des erhaltenen Stoffs,

f) Flotation in einer Flotationsvorrichtung,

g) Rückführung des dabei gewonnenen Wassers in
   den Wasserkreislauf.

das dadurch gekennzeichnet ist, daß man vor oder im
Anschluß an die Vorsortierung und Dickstoffreinigung
und vor der Eindickung auf 0,8 bis 1,5 % bevorzugt 1%
Stoffdichte, verdünnt, die Suspension in einer Flotationseinrichtung I flotiert und das bei der anschließenden Eindickung und Entwässerung anfallende Wasser
in den Kreislauf der Aufbereitungsstufe zurückleitet.
Die Gesamtzahl der Flotationszellen muß gegenüber
dem Stand der Technik nicht erhöht werden.
Das Verfahrensschema II zeigt das Prinzip des erfindungsgemäßen Verfahrens.
In einer bevorzugten Ausführungsform wird das durch
die Flotation aufbereitete Prozeßwasser der Aufbereitungsstufe in einem geschlossenen Kreislauf
geführt.

Eine besonders geeignete Verfahrensvariante besteht
darin, den Schaum aus der Flotation II
der Flotation I (Aufbereitungsstufe) zuzuführen und den Schaum dieser Flotation dann durch
eine Sekundärflotation zu leiten, aus der der Schwarzstoff als Abfall abgetrennt wird.

20 - 70 %, vorzugsweise 50 %, der Flotationskapazität
werden in der Aufbereitungsstufe installiert. Damit

...

erreicht man, daß die Hauptmenge der Druckfarben bereits an dieser Stelle ausgeschleust wird und der 1. Kreislauf sauber bleibt. Die Gefahr eines Aufziehens der Druckfarbe auf die Faser fällt dadurch weg. Die mit der Flotation verbundene Ausschleusung von Katalyten verbessert zusätzlich die Wirksamkeit der Peroxidbleiche.

Die beim Deinkingprozeß gemäß der Erfindung einzusetzenden Chemikalien sind dem Fachmann ebenso wie die notwendigen Temperaturen bekannt. Die Aufteilung auf die beiden Verfahrensstufen erfolgt in folgenden Proportionen. Die Verfahrensschritte werden als Aufbereitungs- bzw. als Endstufe bezeichnet.

| Zugabestelle | Menge insgesamt % (atro Stoff) | Aufbereitungsstufe Dickstoff/ Dünnstoff Pulper Gew.-% (Gesamtmenge der jeweiligen Chemikalien) | Endstufe Mischer v. d. Turm |
|---|---|---|---|
| Wasserstoffperoxid (100 %) | 0,5-1,5 | 20(10-70) | 80(90-30) |
| NaOH % | 0,5-1,5 | 50(10-70) | 50(90-30) |
| Na$_5$DTPA 40 %ig | 0-0,4 | 100(20-100) | 0( 0-80) |
| Wasserglas 38-40°Bé | 0-5,0 | 70(100-30) | 30( 0-70) |
| Seife oder Fettsäure (Sammler) | 0,2-1,0 | 50(20-80) | 50(80-20) |
| Netzmittel/ Emulgator z.B.Fettalkoholpolyglycoläther | 0-0,2 | 100(0-50) | 0(50-0) |

Die Zahlen vor den Klammern entsprechen den üblicherweise zu empfehlenden Mengen. Sie sind jedoch weit-

...

gehend variierbar. Die möglichen Grenzen sind in
Klammern angefügt. Die als Sammler dienende Seife kann
auch in gelöster Form ganz oder teilweise erst kurz
vor den Flotationszellen eingebracht werden.

...

Beispiel 1 -altes Dickstoffsystem-

1000 kg einer Altpapiermischung aus 60 % Zeitungen und 40 % Illustrierten wurden in einem Dickstoffpulper 15 Minuten bei 14 % Stoffdichte in Wasser von 30°C aufgelöst. Der Stoff wurde dann auf 3,5 % Stoffdichte verdünnt, lagerte 1 Stunde bei 30°C in einer Bütte, durchlief eine Sortiertrommel und einen Dickstoffreiniger zur Abtrennung von Plastik, Buchrücken, Naßfestmaterial und Schwerschmutz und wurde dann auf einem Banddruckfilter (A) auf 22 % Stoffdichte entwässert. In einem nachgeschalteten Mischer wurde eine Lösung gleichmäßig eingebracht, die auf den Stoff bezogen 0,85 % $H_2O_2$, 1% NaOH, 3% Wasserglas, 0,2% $Na_5DTPA$, 0,1% Fettalkoholpolyglycoläther und 0,7 % Seife enthielt. Der Stoff reagierte nun in einem Turm 2 Stunden bei 40°C. Nach dem Austrag aus dem Bleichturm wurde der Stoff in einem Entstipper weiter homogenisiert, in einem Vertikalsichter sortiert und dann in die Flotation geleitet. In dieser wurde während 10 Minuten Verweildauer heftig belüftet. Der Schaum enthielt die Druckfarben. Er wurde abgetrennt und in einer Sekundärflotation konzentriert. Der Gutstoff wurde auf 3,5 % Stoffdichte eingedickt und dann auf einem Banddruckfilter (B) auf 22 % Stoffdichte abgepreßt. Das Abwasser des Filter (A) wurde entsprechend Schema I zum Ansatz des Pulpers und für die nachfolgenden Verdünnungen verwendet. Das Abwasser des Filters (B) diente zur Ergänzung des ersten Kreislaufes, zum Austrag aus dem Turm und zur Verdünnung vor der Flotation. Es wurde durch Frischwasser von 20° dH ergänzt. Der Dickstoffpulper wurde im Gegensatz zum anschließenden System diskontinuierlich betrieben·

...

Beispiel 2 -Erfindung-

1000 kg einer Altpapiermischung aus 60 % Zeitungen und 40 % Illustrierten wurden in der Aufbereitungsstufe in einem Dickstoffpulper 8 Minuten bei 14 % Stoffdichte in einer 30°C warmen, wässrigen Chemikalienlösung aufgelöst. Die Flotte enthielt 1,7 kg $H_2O_2$ (100), 5 kg NaOH, 21 kg Wasserglas 38°Bé, 2 kg $Na_5DTPA$, 1 kg Fettalkoholpolyglycoläther und 3,5 kg Seife. Nach weiteren 7 Minuten wurde auf 3,5 % Stoffdichte verdünnt und in eine Bütte abgelassen, in der der Stoff 1 Stunde bei 30°C lagerte. Nach Durchlaufen einer Sortiertrommel und eines Dickstoffreinigers wurde auf 1% Stoffdichte verdünnt und dann 5 Minuten flotiert (Flotation I). Der Stoff wurde nun auf 3,5 % eingedickt und auf einem Banddruckfilter (A) auf 22 % abgepreßt. In der folgenden Endstufe wurde in einem nachgeschalteten Mischer eine wässrige Lösung gleichmäßig eingebracht, die auf 1000 kg Stoff bezogen 6,8 kg $H_2O_2$, 5 kg NaOH, 9 kg Wasserglas und 3,5 kg Seife enthielt. Der Stoff reagierte nun in einem Turm 2 Stunden bei 40°C. Nach dem Austrag aus dem Bleichturm wurde in einem Entstipper homogenisiert, auf 1 % verdünnt und in einem Vertikalsichter sortiert. Es folgte die Flotation II, die auf 5 Minuten Verweildauer beschränkt blieb.

Der Gutstoff wurde auf 3,5 % eingedickt und dann auf einem Banddruckfilter auf 22 % Stoffdichte abgepreßt. Das Abwasser des Filters (A) diente zum Ansatz im Dickstoffpulper und für die anschließenden Verdünnungen. Das Abwasser des Filters (B) ergänzte den 1. Kreislauf und diente weiter zur Verdünnung nach dem Bleichturm. Es wurde durch Frischwasser von 20° dH ergänzt. Der Schaum der Flotation II kam mit dem Verdünnungswasser in die Flotation I. Der Schaum der Flotation I wurde in einer Sekundärflotation weiter konzentriert. Das Abwasser wurde dem Verdünnungswasser der Flotation I zugeschlagen. Die Zahl der Flotationszellen war in den beiden Beispielen gleich.

| Beispiel | | 1 | 2 |
|---|---|---|---|
| | | Stand der Technik | Erfindung |
| Weißgehalt $R_{457}$ des Regeneratstoffes | | | |
| Ansatz | 1 | 63,1 | 65,7 |
| | 2 | 63,6 | 65,7 |
| | 3 | 62,6 | 65,4 |
| | 4 | 62,4 | 65,3 |
| | 5 | 62,5 | 64,9 |
| | 6 | 62,1 | 65,4 |
| | 7 | 62,0 | 65,3 |
| | 8 | 62,1 | 65,5 |
| | 9 | 62,3 | 64,8 |
| | 10 | 61,7 | 64,9 |
| visuelle Beurteilung der Rückwässer | | | |
| -Aufbereitungsstufe | | dunkel | hell |
| -Endstufe | | hell | hell |
| zur Auflösung des Altpapiers benötigte Laufdauer des Dickstoffpulpers in Minuten | | 15 | 8 |

Es zeigt sich, daß erfindungsgemäß ein höherer Weißgehalt erzielt wird. Die Laufdauer des Dickstoffpulpers ist deutlich geringer, was angesichts der großen Leistungsaufnahme als Vorteil zu werten ist.

Degussa Aktiengesellschaft
6000 Frankfurt am Main 1

Verfahren zum Entfärben von Altpapier

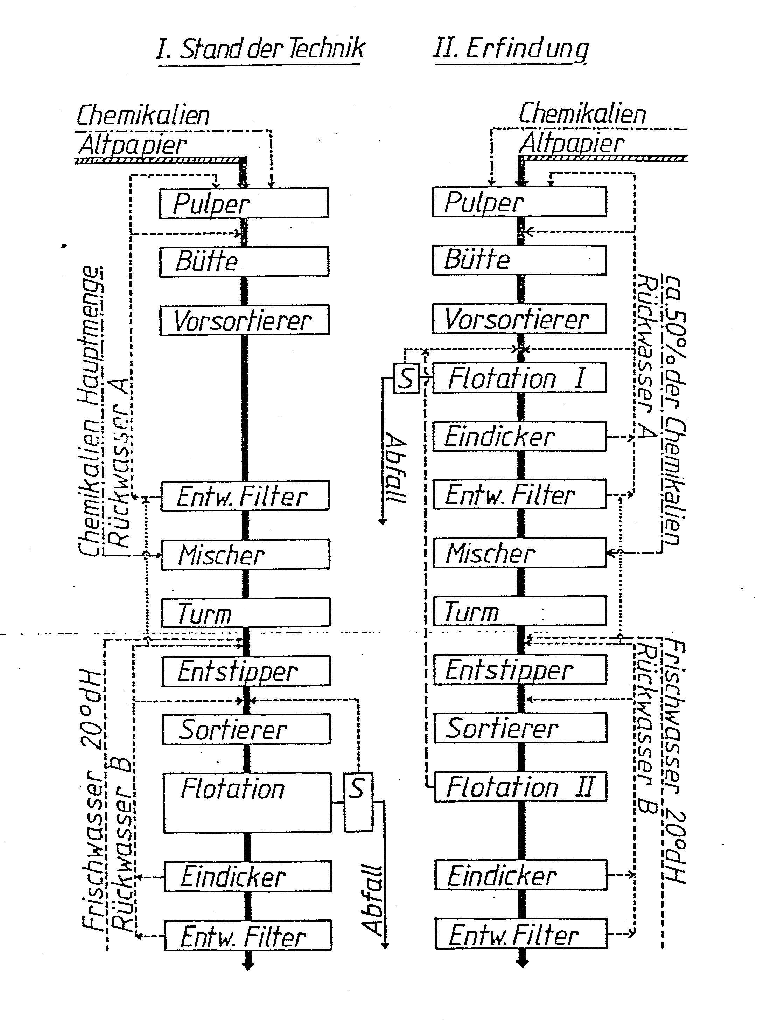

Patentansprüche

1. Verfahren zum Entfärben von Altpapier unter

a) Auflösung in einem Dickstoffpulper und gegebenenfalls gleichzeitigem Zusatz eines Teils der Deinkingchemikalien,

b) Vorsortierung und Dickstoffreinigung,

c) Eindickung auf Stoffdichten von über 10 %,

d) Behandlung in einem Reaktionsturm unter Zusatz des anderen Teils der Deinkingchemikalien,

e) Verdünnung des erhaltenen Stoffs,

f) Flotation in einer Flotationsvorrichtung,

g) Rückführung des dabei gewonnenen Wassers in den Wasserkreislauf,

dadurch gekennzeichnet, daß man vor oder im Anschluß an die Vorsortierung und vor der Eindickung auf 0,8 bis 1,5 % Stoffdichte verdünnt, die Suspension in einer Flotationseinrichtung I flotiert und das bei der anschließenden Eindickung und Entwässerung anfallende Wasser in den Kreislauf der Aufbereitungsstufe zurückleitet.

...

0116145

2. Verfahren nach Anspruch 1, <u>dadurch gekennzeichnet,</u> daß man das durch die Flotation I geklärte Prozeßwasser der Aufbereitungsstufe in einem geschlossenen Kreislauf führt.

3. Verfahren nach den Ansprüchen 1 und 2, <u>dadurch gekennzeichnet,</u> daß man 20 - 70 % der Flotationskapazität in der Aufbereitungsstufe installiert.

...

1/1

**I. Stand der Technik**  **II. Erfindung**

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl ³) |
|---|---|---|---|
| A | DE-A-3 116 905 (J.M. VOITH)<br>* Insgesamt *<br><br>--- | 1 | D 21 C 5/02 |
| A | DE-B-2 805 445 (J.M. VOITH)<br>* Insgesamt *<br><br>--- | 1 | |
| D,A | DE-B-2 813 448 (J.M. VOITH)<br><br>--- | | |
| A | GB-A-2 064 376 (J.M. VOITH)<br><br>----- | | |

RECHERCHIERTE
SACHGEBIETE (Int. Cl. ³)

D 21 B
D 21 C

Der vorliegende Recherchenbericht wurde für alle Patentansprüche erstellt.

| Recherchenort | Abschlußdatum der Recherche | Prüfer |
|---|---|---|
| DEN HAAG | 05-03-1984 | NESTBY K. |